# EUROPEAN PATENT APPLICATION

(11) **EP 2 237 506 A1**
(43) Date of publication of application: **06.10.2010**
(21) Application number: 10002966.9
(22) Date of filing: 19.03.2010
(51) Int. Cl.: H04L 12/56, H04L 12/24, H04L 29/08

(54) **Adaptive multiple pathway session setup to support QoS services**

(30) Priority: 31.03.2009 US 415639
(71) Applicant: Broadcom Corporation, Irvine, CA 92617 (US)
(72) Inventor: Karaoguz, Jeyhan, 92606 Irvine CA (US); Bennett, James, 36301 Hroznetin (CZ)
(74) Representative: Jehle, Volker Armin

(57) **Abstract**

A user device (140a,140b,140c) is operable to request setup of one or more serving routes to be utilized for delivering content to the user device (140a,140b,140c). The user device (140a,140b,140c) is operable to receive the delivered content via the one or more serving routes and/or one or more auxiliary routes based on the request. The serving routes and the auxiliary routes are determined based on a provisioning profile for the user device (140a,140b,140c). The provisioning profile comprises preferred service types, desired QoS for one or more services, client account information, and/or client billing and credit verification information. A connection or communication session is established dynamically based on demand, from the user device (140a,140b,140c) and/or a supporting network, for each of the determined one or more auxiliary routes. The user device (140a,140b,140c) is operable to receive the delivered content via the determined auxiliary routes in the established connection sessions.

## Description

### CROSS-REFERENCE TO RELATED APPLICATIONS/INCORPORATION BY REFERENCE

NOT APPLICABLE.

### FIELD OF THE INVENTION

Certain embodiments of the invention relate to communication systems. More specifically, certain embodiments of the invention relate to a method and system for adaptive multiple pathway session setup to support QoS services.

### BACKGROUND OF THE INVENTION

With the increasing importance of the Internet as a commercial infrastructure and the increasing need for massive Internet based services such as Voice over Internet Protocol (VoIP), the operation of the IP network is becoming more important and complex than ever. Current Internet architecture is mostly based on the best effort (BE) model, where packets can be dropped indiscriminately in the event of congestion. Such an architecture attempts to deliver all traffic as soon as possible within the limits of its abilities. The BE model works well for some applications such as FTP and email. To attract more users and satisfy user demands, Internet service providers (ISPs) provides not only best-efforts services such as email but also various newly emerged real-time multimedia applications such as VoIP, Video-Conferencing and Video on-Demand (VoD). To this end, various technologies such as stream categorizing and traffic monitoring are utilized to meet QoS requirements associated with various IP based services.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for adaptive multiple pathway session setup to support QoS services, substantially as shown in and/or described in connection with at least one of the figures, as set forth more completely in the claims.

According to an aspect, a method for communication comprises:
requesting by a user device, setup of one or more serving routes to be utilized for delivering content to said user device; and
receiving by said user device, said delivery of said content via said one or more serving routes and/or one or more auxiliary routes based on said request.

Advantageously, said one or more serving routes and said one or more auxiliary routes are determined based on a provisioning profile for said user device.

Advantageously, said provisioning profile comprises preferred service types, desired QoS for one or more services, client account information, and/or client billing and credit verification information.

Advantageously, a connection session is established dynamically based on demand, from said user device and/or a supporting network, for each of said determined one or more auxiliary routes.

Advantageously, the method further comprises receiving said delivery of said content via said determined one or more auxiliary routes in said one or more established connection sessions.

Advantageously, the method further comprises receiving said delivery of said content simultaneously via said determined one or more serving routes and said determined one or more auxiliary routes in said one or more established connection sessions.

Advantageously, the method further comprises receiving different contents via said determined one or more serving routes and/or said determined one or more auxiliary routes in said one or more established connection sessions.

Advantageously, the method further comprises receiving said delivery of said content via said determined one or more auxiliary routes in said one or more established connection sessions prior to releasing associated resources for said determined one or more serving routes.

Advantageously, the method further comprises receiving on-demand supplemental QoS based on said delivery of said content via said determined one or more auxiliary routes in said one or more established connection sessions.

Advantageously, the method further comprises receiving said delivery of said content only via said determined one or more auxiliary routes in said one or more established connection sessions.

According to an aspect, a system for communication comprises:
one or more circuits for use in a user device, wherein said one or more circuits are operable to request setup of one or more serving routes to be utilized for delivering content to said user device; and
said one or more circuits are operable to receive said delivery of said content via said one or more serving routes and/or one or more auxiliary routes based on said request.

Advantageously, said one or more serving routes and said one or more auxiliary routes are determined based on a provisioning profile for said user device.

Advantageously, said provisioning profile comprises preferred service types, desired QoS for one or more services, client account information, and/or client billing and credit verification information.

Advantageously, a connection session is established dynamically based on a demand, from said user device and/or a supporting network, for each of said determined one or more auxiliary routes.

Advantageously, said one or more circuits are operable to receive said delivery of said content via said determined one or more auxiliary routes in said one or more established connection sessions.

Advantageously, said one or more circuits are operable to receive said delivery of said content simultaneously via said determined one or more serving routes and/or said determined one or more auxiliary routes in said one or more established connection sessions.

Advantageously, said one or more circuits are operable to receive different contents via said determined one or more serving routes and/or said determined one or more auxiliary routes in said one or more established connection sessions

Advantageously, said one or more circuits are operable to receive said delivery of said content via said determined one or more auxiliary routes in said one or more established connection sessions prior to releasing associated resources for said determined one or more serving routes.

Advantageously, said one or more circuits are operable to receive on-demand supplemental QoS based on said delivery of said content via said determined one or more auxiliary routes in said one or more established connection sessions.

Advantageously, said one or more circuits are operable to receive said delivery of said content only via said determined one or more auxiliary routes in said one or more established connection sessions.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a system diagram illustrating an exemplary communication system that enables adaptive multiple pathway session setup to support QoS services, in accordance with an embodiment of the invention.

FIG. 2 is a block diagram illustrating an exemplary server device that is operable to enable adaptive multiple pathway session setup to support QoS services, in accordance with an embodiment of the invention.

FIG. 3 is a block diagram illustrating an exemplary connection management module that enables adaptive multiple pathway session setup to support QoS services, in accordance with an embodiment of the invention.

FIG. 4 is a block diagram illustrating an exemplary user device that is operable to support an adaptive multipath connection call, in accordance with an embodiment of the invention.

FIG. 5 is a flow chart illustrating an exemplary adaptive multipath connection session setup procedure, in accordance with an embodiment of the invention.

FIG. 6 is a flow chart illustrating exemplary adaptive multipath connection packet routing, in accordance with an embodiment of the invention.

### DETAILED DESCRIPTION OF THE INVENTION

Certain embodiments of the invention may be found in a method and system for adaptive multiple pathway session setup to support QoS services. In an exemplary embodiment of the invention, a user device is operable to request setup of one or more serving routes to be utilized for delivering content to the user device. The user device is operable to receive the delivered content via the one or more serving routes and/or one or more auxiliary routes based on the request. The serving routes and the auxiliary routes are determined based on a provisioning profile for the user device. The provisioning profile comprises preferred service types, desired QoS for one or more services, client account information, and/or client billing and credit verification information. A connection or communication session is established dynamically based on demand, from the user device and/or a supporting network, for each of the determined one or more auxiliary routes. The user device is operable to receive the delivered content via the determined auxiliary routes in the established connection sessions. The user device is operable to receive the delivered content simultaneously via the serving routes and the determined auxiliary routes. Different contents may be received by the user device via the determined serving routes and/or the determined auxiliary route. The user device is operable to receive delivery of the content via the auxiliary routes prior to releasing associated resources for the determined one or more serving routes. The user device is operable to receive on-demand supplemental QoS based on the delivery of the content via the determined one or more auxiliary routes. In some instances, the user device is operable to receive the delivery of the content only via the determined auxiliary routes.

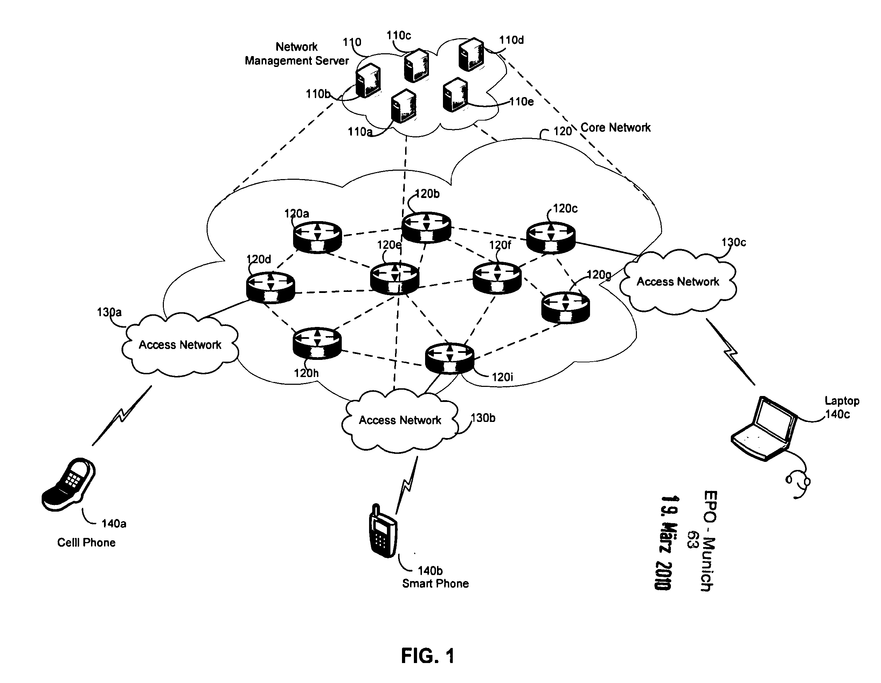

FIG. 1 is a system diagram illustrating an exemplary communication system that enables adaptive multiple pathway session setup to support QoS services, in accordance with an embodiment of the invention. Referring to FIG. 1, there is shown the system of FIG. 1 comprises a plurality of network management (NM) servers 110a-110e, that are collectively referenced as network management servers 110, a core network 120 comprising a plurality of routers 120a-120i, a plurality of access networks 130a-130c, a plurality of user devices, of which a cell phone 140a, a smartphone 140b, and a laptop 140c are presented.

Each of the NM servers 110 such as the NM server 110a comprises suitable logic, circuitry and/or code that are operable to manage various aspects of network communications such as, for example, selecting access network that a client such as the cell phone 140a uses to access the core network 120 and determining core network routes for forwarding various client packet streams to intended recipients. In instances where an established link or connection between a client such as the cell phone 140a and an access network such as the access network 130a is maintained, the NM server 110a is operable to determine core network routes for forwarding packet streams to intended recipients for the given access network 130a. The NM server 110a is configured to manage client registration and client provisioning. In this regard, the client provisioning may be performed automatically and/or manually via user inputs. The client provisioning information comprises, for example, preferred Internet Service Provider (ISP), preferred services, a username tied to the account, and associated billing information. In this regard, the client provisioning information such as the preferred services is used to enable an adaptive multipath connection call. The NM server 110a is also operable to handle associated client locations. For example, in a mobile IP environment, the NM server 110a manage clients' available IP addresses and forwards client packet streams for each connection session using appropriate IP address notified by corresponding clients.

Various client-server signaling messages such as a service setup request are processed at the NM server 110a. For example, upon receiving a service setup request message from a user device such as the cell phone 140a, the NM server 110a is operable to select a route, also called a pathway, to establish a connection between the cell phone 140a and an intended peer user device such as the smartphone 140b. In this regard, the NM server 110a is configured to actively search for multiple auxiliary pathways to support various QoS levels once a serving pathway or multiple serving pathways for a call is established and activated. The multiple auxiliary routes comprise additional routes, which are different from the serving routes that are established for a call between two or more entities. These auxiliary routes are established during a communication session based on, for example, associated user terminal provisioning information. The auxiliary routes may be established during a communication session to, for example, ensure that a particular service quality may be provided and/or maintained during the communication session. A call comprises various types of communication sessions such as, for example, multimedia communication, voice communication, video communication, and data communication, between two or more parties or devices. During the call or the communication sessions, the NM server 110a dynamically selects one or more auxiliary pathways for a desired QoS. The selected one or more auxiliary pathways are adaptively set up and activated based on, for example, associated QoS and/or time-of-day. The setup of the selected one or more auxiliary pathways is initiated by either the NM servers 110 or a user device such as the cell phone 140a.

The NM server 110a is configured to service the communication sessions in various ways via the activated one or more auxiliary pathways. For example, the NM server 110a may utilize the activated one or more auxiliary pathways as well as the serving pathway to support the communication sessions at the same time. The NM server 110a may enable handoff during the communication sessions from the serving pathway to the activated one or more auxiliary pathways. In this regard, the NM server 110a may be enabled to handoff entire packets associated with the communication session from the serving pathway to the activated one or more auxiliary pathways. Alternatively, the NM server 110a may be enabled to route different sets of packets associated with the communication session over different routes among the serving pathway and the activated one or more auxiliary pathways to take advantage of diversity combining different paths. Moreover, the NM server 110a may utilize the activated one or more auxiliary pathways for redundancy and/or additional capacity when needed. In one embodiment of the invention, in order to increase reliability, different sets of packets associated with content for the service are routed over different routes among the determined multiple routes to take advantage of diversity combining different paths.

To enable communications over a connection, a communication session, which indicates a sequence of client-server interactions within a timeframe, is created by the NM server 110a. The NM server 110a is operable to generate a unique session ID for the created session and communicates with associated user devices such as the cell phone 140a and the smartphone 140b, respectively. An associated session profile of the created session comprises various session parameters such as, for example, session ID, time stamp, type of service (ToS), user ID, and/or addresses and ports. The session profile is stored at the NM server 110a for later use. Session parameters are primarily used to influence server operations. For example, the NM server 110a is operable to establish, maintain, update, and/or terminate the session per defined communication session parameters. In this regard, the NM server 110a is configured to establish the communication sessions over one or more auxiliary pathways in the middle of an on-going communication session of associated user devices such as the cell phone 140a and/or the smartphone 140b. In the event that users of the cell phone 140a and/or the smartphone 140b are willing to gain a desired QoS during a VoIP call, the NM server 110a is operable to select multiple other routes such as auxiliary routes and establish communication sessions over these selected multiple other routes such as auxiliary routes.

The core network 120 comprises suitable logic, circuitry and/or code that are operable to interface various access networks such as the access network 130a-130c with external data networks such as PDNs and the internet. There are a number of routers connected through links in the core network 120. Each router such as the router 120a comprises suitable logic, circuitry and/or code that are operable to forward packet streams to intended recipients. The router 120a is configured to exchange information such as link resource information for each link with one another. The link resource information comprises information of the resources available and information of the resources which have boon reserved. Routers within the core network 120 are managed by the NM servers 110 in a unified way to allow easy and efficient maintenance thereof.

Various user devices such as the cell phone 140a comprise suitable logic, circuitry and/or code that enable various data communications via the access network 130a and/or the core network 120. The cell phone 140a is enabled to access various services via the NM server 110a, for example. The cell phone 140a is operable to gain QoS enhancement for some preferred services. For example, in the event that the user of the cell phone 140a wishes to pay more for a QoS guaranteed VoIP call, the cell phone 140a is then provisioned for an adaptive multipath connection call at the NM server 110a. A particular VolP call to the cell phone 140a is communicated over one or more communication sessions adaptively established based on associated QoS.

In an exemplary operation, it is desirable for the cell phone 140a to maintain a desired QoS during a communication session such as a VoIP call or data transfer with the smartphone 140b. The desired QoS may be initial QoS requirements at the call setup and/or middle call QoS updates. The NM server 110a is configured to enable an adaptive multipath connection call feature, based on associated client provisioning information, once a corresponding service request is received from the cell phone 140a. During the VoIP call, the NM server 110a actively searches for multiple auxiliary pathways to support the desired QoS. Based on associated QoS performance observed by the NM server 110a or associated user devices such as the cell phone 140a and/or the smartphone 140b, the NM server 110a sets up one or more auxiliary pathways and adds to the on-going VoIP call to, for example, maintain the desired QoS. The NM server 110a is operable to support the desired QoS in various ways such as, for example, using the added one or more auxiliary pathways and the associated serving pathway, a mid-call handoff, and/or offering supplemental QoS via the added one or more auxiliary pathways when needed.

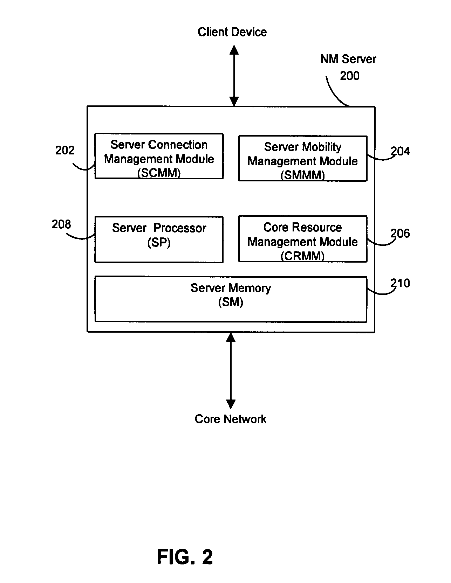

FIG. 2 is a block diagram illustrating an exemplary server device that is operable to enable adaptive multiple pathway session setup to support QoS services, in accordance with an embodiment of the invention. Referring to FIG. 2, there is shown a NM server 200 comprising a server connection management module (SCMM) 202, a server mobility management module (SMMM) 204, a core resource management module (CRMM) 206, a server processor (SP) 208, and a server memory (SM) 210.

The SCMM 202 comprises suitable logic, circuitry and/or code that are operable to monitor network connectivity and handle various connection session signaling messages with clients such as the cell phone 140a and the smartphone 140b. The connection session signaling messages comprises various service or QoS request messages. For example, upon the receipt of a QoS message from a user device such as the cell phone 140a via the server processor (SP) 208, the SCMM 202 is configured to execute various operations related to admission control and route control. In this regard, the SCMM 202 is enabled to access the client provisioning information and provide an adaptive multipath connection to support, for example, the desired QoS associated with the requested service.

To enable the adaptive multipath connection, the SCMM 202 evaluates network resource status from the CRMM 206 and searches for one or more auxiliary pathways to support various desired QoS levels in the middle of a communication session. Multiple auxiliary pathways are selected dynamically for a desired QoS. The information associated with the selected multiple auxiliary pathways and/or access networks are forwarded back to the SP 208 for further processing. The SCMM 202 is enabled to select multiple auxiliary pathways by using various algorithms stored in the SM 210. For example, each of the multiple auxiliary pathways is selected by maximizing available bandwidth over the corresponding pathway, or by minimizing the number of routers or hops across the pathway. The multiple auxiliary pathways may also be selected based on pathway cost. Since higher cost pathways may guarantee higher QoS, the higher cost pathways may be chosen for auxiliary pathways over lower cost pathways to ensure, for example, a desired QoS, and/or cheaper delivery. The SCMM 202 is operable to maintain and release various pathways within the core network 120.

The SMMM 204 comprises suitable logic, circuitry and/or code that are operable to manage mobility information such as, for example, client addresses and client locations for the system of FIG.1. The SMMM 204 is configured to handle mobility information via various client address mappings to ensure a seamless user experience. The mobility information is provided to the SCMM 202, the CRMM 206, and the SP 208 such that packet streams for each active session are transmitted to intended recipients notified by respective clients.

The CRMM 206 comprises suitable logic, circuitry and/or code that are operable to handle route/pathway resource information according to various QoS requirements and system capabilities. In the event that a resource request from the SCMM 202 is received by the CRMM 206, the CRMM 206 evaluates resource status of the core network 120. The CRMM 202 provides core resource information such as status of pathways with available resources in the core network 120, to the SCMM 202 to be used for various route/pathway selections.

The SP 208 comprises various types of processors or circuitry such as a microprocessor, a digital signal processor, an Application Specific Integrated Circuit (ASIC), or a combination of processing type devices. The SP 208 is operable to execute a plurality of software instructions, which are stored in the server memory (SM) 210 and downloaded for execution. In this regard, the SP 208 is configured to calculate session IDs for various connection sessions using various algorithms stored in the SM 210. The SP 208 is operable to communicate various information such as, for example, the route/pathway selection information from the SCMM 202, with clients via the core network 120 and various access networks such as the access network 130a.

The SM 210 comprises suitable logic, circuitry, and/or code that are operable to enable storage of data and/or other information utilized by the NM server 200. For example, the server memory 206 is utilized to store processed data generated by the SP 208. The SM 210 is also utilized to store information such as session profiles that are utilized to control various operations of the NM server 200. The SM 210 is operable to store information necessary to enable or disable a particular service for a given user device. The server memory 206 is also operable to store some executable instructions for, for example, a connection session set-up, mid-call multiple auxiliary connection session set-up, session profile update, and/or auxiliary connection session establishment. The SM 210 comprises RAM, ROM, low latency nonvolatile memory such as flash memory and/or other suitable electronic data storage capable of storing data and instructions.

In operation, the NM server 200 receives a service request message from a user device such as the cell phone 140a. The service request message comprises information such as the associated QoS requirements of the requested service, a candidate list of access networks that the cell phone 140a uses, and an identity of an intended peer user device such as the smartphone 140b. The SP 208 forwards the received service request information to the SCMM 202. The server connection management module 202 is enabled to communicate with the peer user device such as the smartphone 140b to confirm the received service request. If the smartphone 140b agrees to communicate with the cell phone 140a for the requested service, then, the SCMM 202 coordinates with the SMMM 204 to gain mobility information of the related clients. In instances where a communication session is established over an adaptive multipath connection between the cell phone 140a and the smartphone 140b. The SCMM 202 communicates with the CRMM 206 to acquire the core resource information. The core network resource information may comprise information regarding network nodes (routers), network node memory, and/or the links. The SCMM 202 actively searches for one or more auxiliary pathways based on the acquired core resource information to support various desired QoS levels in the middle of the call. Multiple auxiliary pathways are selected dynamically based on associated QoS performance. The selected multiple auxiliary pathways are established and added to the call when needed.

The SP 206 generates a session ID for communicating packet data of requested service over the adaptive multipath connection between the cell phone 140a and the smart phone 140b. The generated session ID together with the selected access network information are communicated with related clients. In addition, an associated session profile comprising various session parameters such as session ID and type of service is created and stored in the SM 210 to be used for later communication. In the event that an adaptive multiple pathway connection is enabled, the SP 206 is operable to generate a session ID and/or a session profile for each of the selected multiple auxiliary pathways. The generated session IDs and session profiles associated with the selected multiple auxiliary pathways are stored in the SM 210 to be used for later communication. In instances where the SP 208 receives packets, which indicate that the received packets are associated with the generated session IDs stored in the SM 210, the SP 208 is operable to communicate the packets over the corresponding pathways. For the adaptive multiple pathway connection, the SP 206 is configured to communicate the packets over the serving pathway and the selected multiple auxiliary pathways simultaneously. The SP 206 is operable to hand off the packets to the multiple auxiliary pathways from the serving pathway. Moreover, the SP 206 is operable to use the selected multiple auxiliary pathways as an auxiliary system to provide supplemental QoS to the serving pathway, for example.

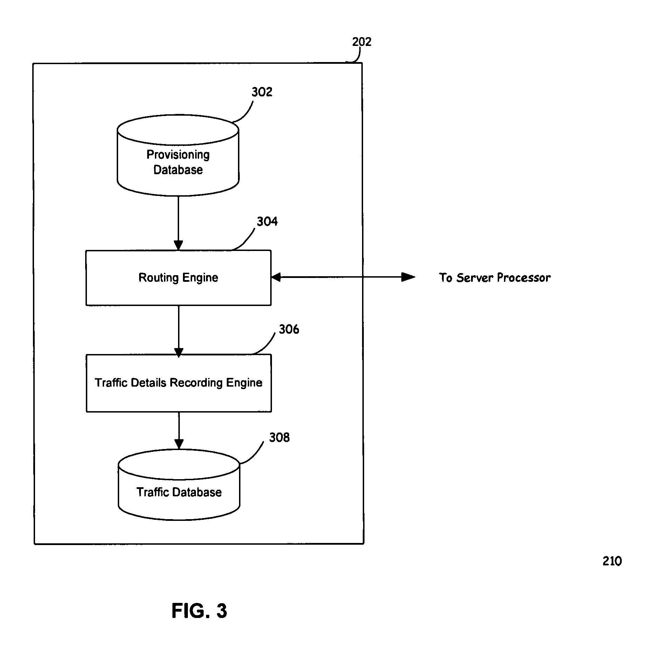

FIG. 3 is a block diagram illustrating an exemplary connection management module that enables adaptive multiple pathway session setup to support QoS services, in accordance with an embodiment of the invention. Referring to FIG.3, there is shown a connection management module 202 comprising a provisioning database 302, a routing engine 304, a traffic recording engine 306, and a traffic database 308.

The provisioning database 302 comprises suitable logic, circuitry and/or code that enable storage of information necessary to route particular calls over the Internet. For example, the information regarding client ID, client preferred services, client account, enhancing QoS for particular calls, client billing and credit verification, and carrier trunk groups. The provisioning database 302 is stored in RAM, ROM, low latency nonvolatile memory such as flash memory and/or other suitable electronic data storage capable of storing data and instructions.

The routing engine 304 comprises suitable logic, circuitry and/or code that is operable to select various routes for the received service requests based upon one or more attributes such as, for example, the preferred carrier service provider, a desired Quality of Service (QoS), cost, or other factors. The routing information generated by the routing engine 304 comprises a destination router address, and/or a preferred Internet Service Provider, which are used for communicating the traffic or contend for the service to the Internet. In one embodiment of the invention, one or more exclusionary rules are applied to candidate routes based on known bad routes, provisioning information from the provisioning database 302, and/or other data. In this regard, the routing engine 304 utilizes provisioned client information stored in the provisioning database 302, for example, client preferred service, client account and billing information, to actively select multiple auxiliary routes or pathways in the middle of a call. The selected multiple auxiliary pathways are dynamically established to forward packets of the requested service during an existing communication session.

In one embodiment of the invention, packets for the service are communicated through an associated serving pathway and the established multiple auxiliary pathways simultaneously. Traffic load are shared among the corresponding pathways. In another embodiment of the invention, packets for the service are handed off from associated serving pathway to the established multiple auxiliary pathways. Traffic load is shared among the corresponding established multiple auxiliary pathways. Moreover, the routing engine 304 may utilize the established multiple auxiliary pathways merely as an auxiliary system to the serving pathway to offer supplemental QoS when needed.

The traffic recording engine 306 comprises suitable logic, circuitry and/or code that is operable to format traffic information about, for example, a VoIP call, such as the originator, recipient, date, time, duration, incoming trunk group, outgoing trunk group, call states, or other information, into a Call Detail Record (CDR). The CDR is stored in the traffic database 308, and is used to generate billing information for network services.

The traffic database 308 comprises suitable logic, circuitry and/or code that enable storage of CDR data from the traffic recording engine 306. The CDR data are stored in a preferred format to facilitate storage of the CDR data. The CDR data is utilized to support customer billing for network services. The traffic database 308 is stored in RAM, ROM, low latency nonvolatile memory such as flash memory and/or other suitable electronic data storage capable of storing data and/or instructions.

In an exemplary operation, the routing engine 304 of the SCMM 202 receives a service request for establishing a communication session such as a VoIP call between the cell phone 140a and the smartphone 140b. The request is initiated by the cell phone 140a. Up receiving the request, the routing engine 304 evaluates the client provisioning information, stored in provisioning database 302, of the cell phone 140a and may enable an adaptive multiple pathway connection for the VoIP call. The routing engine 304 actively searches and selects multiple auxiliary pathways in the middle of a VoIP call. In instances where a desired QoS is required in the middle of the VoIP call, the routing engine 304 sets up the selected multiple auxiliary pathways to be added to the VoIP call for forwarding packets of associated requested service. The traffic information is recorded in the traffic details recording engine 305 as CDR data. The CDR data are saved in the traffic database 308 for supporting customer billing of the network service.

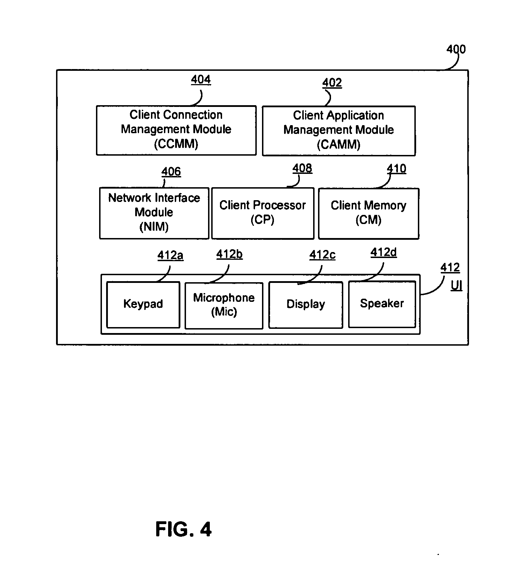

FIG. 4 is a block diagram illustrating an exemplary user device that is operable to support an adaptive multipath connection call, in accordance with an embodiment of the invention. Referring to FIG.4, there is shown a user device 400 comprising a client application management module (CAMM) 402, a client connection management module (CCMM) 404, a network interface module (NIM) 406, a client processor (CP) 408, a client memory (CM) 410, and a user interface (UI) 412 comprising a keypad 412a, a microphone (Mic) 412b, a display 412c, and a speaker 412d, respectively.

The CAMM 402 comprises suitable logic, circuitry, and/or code that are operable to manage various application requirements and status. The various application requirements may comprise information regarding best user quality and QoS attributes. The application status may indicate that, for example, the corresponding service is reserved and/or resumed. The CAMM 402 is configured to monitor the fixed and variable port numbers used for identifying and monitoring application data.

The CCMM 404 comprises suitable logic, circuitry, and/or code that are operable to monitor network connectivity as well as the available bandwidth, transmission delay, and error rate of the connected access networks such as the access networks 130a-130c. The CCMM 404 is configured to handle various connection session signaling messages with the NM server 110a, for example, to access services with desired QoS, via the CP 308. The connection session signaling messages comprises various service request messages such as a QoS request message provided by the CAMM 402.

The NIM 406 comprises suitable logic, circuitry, and/or code that are operable to transmit and/or receive radio signals over an access network which is coupled with the core network 120. The access network may be wired or wireless. The communicated radio signals comprise information from the core network 120 which is managed via the NM server 110.

The CP 408 comprises suitable logic, circuitry, and/or code that are enabled to control and/or data processing operations for the user device 400. The CP 408 is operable to process signals to communicate with a supporting communication network. In this regard, the signals comprise various service signaling messages such as a QoS request message. The user device 400 is operable to signal the NM servers 110 for communication session establishment/re-establishment which enables communication of packet streams to intended recipients over the core network 120. In this regard, the CP 408 is configured to communicate with the NM servers 110 to provide and/or modify client provisioning parameters such as client account information and desired QoS for particular preferred services. The CP 408 is enabled to perform client provisioning automatically with predetermined user configuration profile stored in the CM 410 and/or manually with user inputs via, for example, the keypad 412a and/or the microphone 412b.

The user interface 412 comprises suitable logic, circuitry and/or code that service the user device 400 via entering user inputs and/or presenting various services to users. The user interface 412 comprises the keypad 412a, the microphone (Mic) 412b, the display 412c, the speaker 412d, and/or any other type of interfaces that are employed by the user device 400. In the event that a user of the user device 400 is not satisfied with received QoS, the user is allowed to enter user input(s) via, for example, the keypad 412a and/or the microphone 412b to provide and/or modify client provisioning information such as, for example, the user is willing to pay more to enhance the QoS of the on-going service.

The CM 410 comprises suitable logic, circuitry, and/or code that enable storage of data and/or other information utilized by the CP 408. For example, the CM 410 is utilized to store processed data generated by the CP 408. The CM 410 is operable to store information, such as user device configuration information, that is utilized to control various operations of the user device 400. Some software and/or code stored in the CM 410 are used to translate user input operations via the keypad 412a and/or the microphone 412b into identifiable triggering events to the CP 308 for performing client provisioning with the NM server 110. Communication session information such as associated access router IP addresses and session ID received from the NM servers 110 is stored in the memory 410. The CM 410 is operable to store some executable instructions for running various services on the user device 400.

In operation, in the event that the user device 400 wishes to communicate with a peer user device. The CAMM provides the CP 408 with client application requirements and/or a port number used to identify the client application data at the user device 400. Exemplary client application requirements comprise service type of the application and various QoS attributes such as bit rate and delay constrains associated with the application. The CCMM 404 passes an identity of the peer device such as a telephone number and IP address of a NM server such as the NM server 110a to the CP 408. The CP 408 then issues a service request to the NM server 110a via the NIM 406. The service request represents a request to initiate a connection session with the NM server 110a for a desired QoS with the peer device. Upon receiving a response via the NIM 406 from the NM server 110a, the CP 408 is operable to extract connection session information such as a session ID and access router address from the response and store in the CM 410. The CP 408 is enabled to communicate packet streams associated with the requested service through the NIM 406 according to the established connection session. The received service is presented to the user via the user interface 412 such as the display 412c and/or the speaker 412d, respectively. The CP 408 is operable to provide and/or modify provisioning information regarding user preferred QoS level for the requested service via the NIM 406 before and/or during the requested service established. In this regard, CP 408 is configured to signal the NM servers 110 to activate multiple auxiliary pathways to support the user preferred QoS level of the requested service in the middle of an existing communication session. The signaling comprises information such as preferred QoS levels and session ID associated with the call.

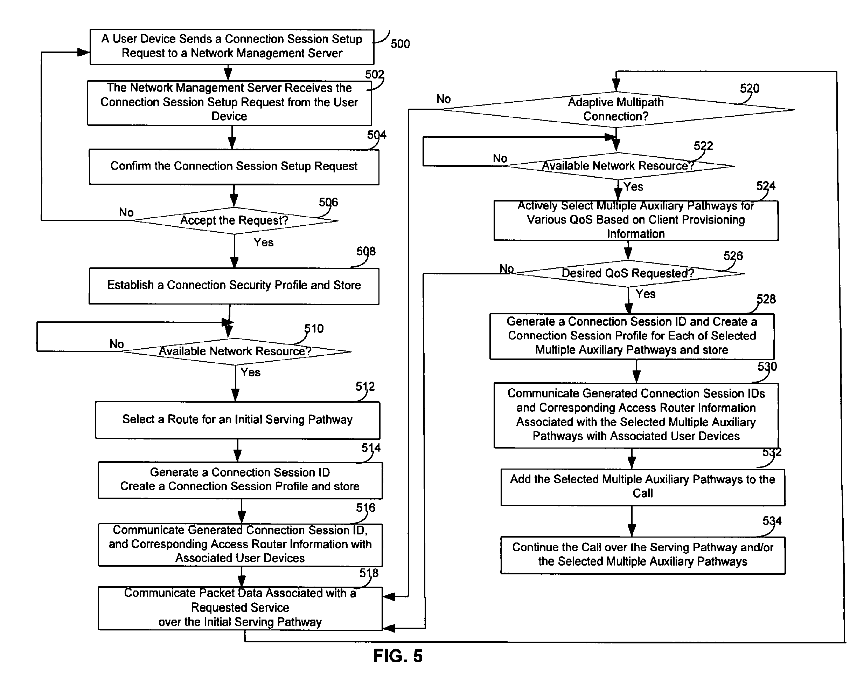

FIG. 5 is a flow chart illustrating an exemplary adaptive multipath connection session setup procedure, in accordance with an embodiment of the invention. Referring to FIG. 5, the exemplary steps start with the step 500, where a user device such as the cell phone 140a sends a connection session setup request to a network management server such as the NM server 110a for a particular service. The connection session setup request comprises information such as, for example, a client application QoS profile (client application requirements), identifiers, time-of-day preferences, cost preferences, and/or candidate access networks that the cell phone 140 uses. The identifiers comprises, for example, IP address of the NM server 110a, port numbers used for identifying application data, source user device name or address, destination user device name or address. In step 502, where the NM service device 110a receives the connection session setup request from the cell phone 140a.

In step 504, upon receiving the connection session setup request, the NM server 110a communicates with the indented user device such as the smartphone 140b to confirm the received request. In step 506, the NM server 110a determines whether the smartphone 140b will accept or honor the request. In instances where the smartphone 140b accepts or honors the request, then in step 508, where the NM server 110a establishes a connection security profile to authenticate each other with associated user devices using a security handshaking procedure. The established security profile is communicated with associated user devices and is stored. Various security handshaking procedures may be used such as, for example, a multi-way security handshaking procedure. A security handshaking procedure enables a trust relationship between the NM server 110a and associated user devices such as the cell phone 140a and the smart phone 140b. A connection security profile specifies various security capabilities such as, for example, security check mechanism, key exchange, encryption algorithm, and/or integrity algorithm that the NM server 110a and associated user devices support.

In step 510, upon the connection authentication procedure is completed, the NM server 110a determines whether the core network 120 has available resources to handle the requested service. In instances where the NM server 110a determines that there are available resources to handle the requested service in the core network 120, then in step 512, the NM server 110a selects a route as a serving pathway for the requested service based on corresponding client provisioning profiles. In step 514, the NM server 110a generates a connection session ID for the selected serving pathway. A connection session profile, which comprises connection session parameters such as, for example, session ID, time stamp, QoS requirements, type of service, CODEC type, router IP address, user ID, and/or MAC address, is created and stored in the SM 210 to be used for later communication. In step 514, the NM server 110a communicates the generated session ID and access router information such as the corresponding access router IP addresses for the cell phone 140a and/or the smartphone 140b to access. In step 518, the generated session profile and the established connection security profile are applied to communicate packet data associated with the requested service over the established connection session.

In step 520, the NM server 110a determines whether the established connection session is an adaptive multipath connection based on the corresponding client provisioning profile. In instances where the NM server 110a determines the established connection session is an adaptive multipath connection, then in step 522, where the NM server 110a determines whether the core network 120 has available resources to be provided to support an adaptive multipath connection feature for the requested service. In instances where the NM server 110a determines that there are available resources to be provided to support the adaptive multipath connection feature for the requested service in the core network 120, then in step 524, the NM server 110a actively selects multiple auxiliary pathways corresponding to various QoS based on client provisioning information stored in the provisioning database 302. In instances where client provisioning information may indicate that established link or connection such as, for example, the link or connection between the cell phone 140a and the access network 130a and/or the link or connection between the smart phone 140b and the access network 130b are maintained, the NM server 110a is operable to select multiple auxiliary pathways for the given pair of access networks such as the access network 130a and the access network 130c. In step 526, the NM server 110a determines whether a desired QoS is requested either from associated user devices or from networks such as the core network 120 and associated access networks 130a and/or 130b. In instances where the NM server 110a determines a desired QoS is requested, then in step 528, the NM server 110a generates connection session ID and Creates a connection session profile for each of the selected multiple auxiliary pathways and store in the server memory 210. In step 530, the NM server 110a communicates the generated connection session IDs and corresponding access router information associated with the selected multiple auxiliary pathways with associated user devices such as the cell phone 140a and/or the smartphone 140b. In instances where established link or connection such as, for example, the link or connection between the cell phone 140a and the access network 130a and/or the link connection between the smart phone 140b and the access network 130b are maintained, access router information associated with the serving pathway are shared by the selected multiple auxiliary pathways. In step 532, the selected multiple auxiliary pathways are added to the call. In step 534, the call is continued by communicating packets data associated with the requested service over the serving pathway and/or the selected multiple auxiliary pathways.

In step 506, in instances where the smartphone 140b does not accept or honor the request, then the exemplary process returns to step 502. In step 510, in instances where the NM server 110a determines that there are no resources available to be provided for the requested service in the core network 120, then the exemplary process stays in step 510. In step 520, in instances where the NM server 110a determines the established connection session is not an adaptive multipath connection, then the exemplary process returns to step 518. In step 522, in instances where the NM server 110a determines that there are no resources available to be provided to support the adaptive multipath connection feature for the requested service in the core network 120, then the exemplary process stays in step 522. In step 526, in instances where the NM server 110a determines no request is received for a desired QoS, then the exemplary process returns to step 518.

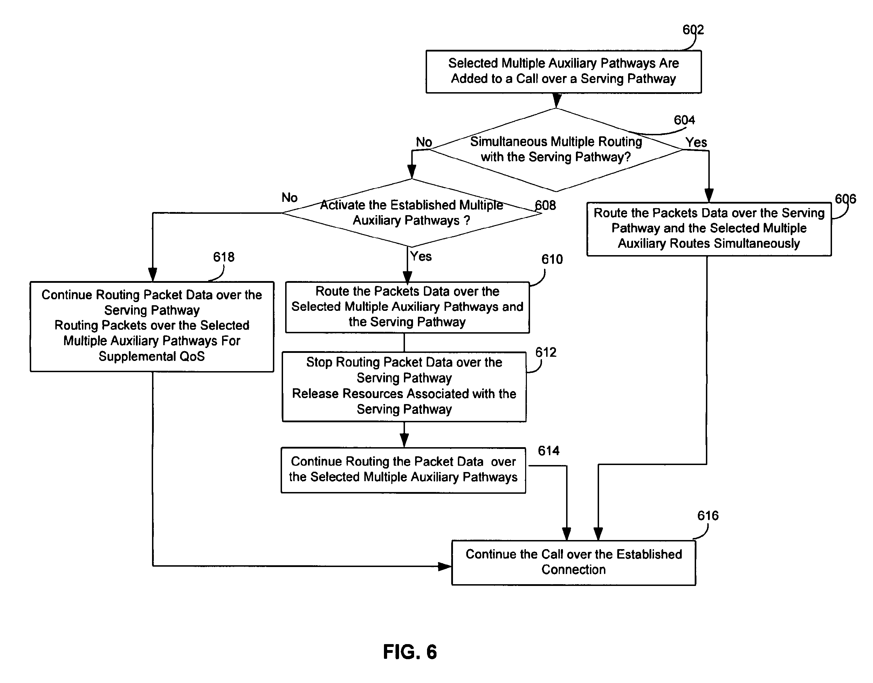

FIG. 6 is a flow chart illustrating exemplary multipath connection packet routing, in accordance with an embodiment of the invention. Referring to FIG. 6, the exemplary steps start with the step 602, where a call continues over an adaptive multiple pathway connection. Multiple auxiliary pathways have been added to the call. In step 604, the NM server 110a, for example, determines whether packets data associated with a requested service are routed over the serving pathway and the established multiple auxiliary pathways, simultaneously. In instances where the NM server 110a determines packets data associated with the requested service are routed over the serving pathway and the established multiple auxiliary pathways, simultaneously, then in step 606, the NM server 110a routes the packets data over the serving pathway and the selected multiple auxiliary routes simultaneously. In this regard, the NM server 110a is configured to route the same packet data over associated multiple pathways to take advantage of diversity combining different paths.

Alternatively, the NM server 110a is enabled to communicate different packet data over different pathways of the associated multiple pathways. Packet data may be differentiated based on different QoS of the requested service, for example. The call continues over the established connection in step 616. In step 604, in instances where the NM server 110a determines packets data associated with the requested service are not routed over the serving pathway and the established multiple auxiliary pathways, simultaneously, then in step 608, the NM server 110a determines whether a connection session soft handover is enabled. In instances where a connection session soft handover is enabled in the system, then in step 610, the NM server 110a is enabled to route the packets data over the selected multiple auxiliary pathways and the serving pathway, simultaneously. In this regard, same packet data or different packet data may be routed over the selected multiple auxiliary pathways. However, the sum of the packet data over the selected multiple auxiliary pathways equals to the packet data routed over the serving pathway. In step 612, routing packet data associated with the requested service over the serving pathway is stopped and resources for the serving pathway are released. In step 614, the NM server 110a continues routing the packet data over the selected multiple auxiliary pathways. The exemplary process continues in step 616.

In step 608, where the NM server 110a determines that a connection session soft handover is disabled, then in step 618, the NM server 110a is enabled to continue routing packet data over the serving pathway and at the same time routing packets over the selected multiple auxiliary pathways to support supplemental QoS when needed.

In an exemplary embodiment of the invention, a user device such as the cell phone 140a is operable to request setup of one or more serving routes to be utilized for delivering content to the user device. The user device is operable to receive the delivered content via the one or more serving routes and/or one or more auxiliary routes based on the request. The serving routes and the auxiliary routes are determined based on a provisioning profile for user device. The provisioning profile comprises preferred service types, desired QoS for one or more services, client account information, and/or client billing and credit verification information. Referring to FIG.5, a connection or communication session is established dynamically based on demand, from the user device and/or a supporting network such as the core network 120, for each of the determined one or more auxiliary routes. Referring to FIG.6, the user device is operable to receive the delivered content via the determined auxiliary routes in the established connection sessions. The user device is operable to receive the delivered content simultaneously via the serving routes and the determined auxiliary routes. Different contents may be received by the user device via the determined serving routes and/or the determined auxiliary route. The user device is operable to receive delivery of the content via the auxiliary routes prior to releasing associated resources for the determined one or more serving routes. The user device is operable to receive on-demand supplemental QoS based on the delivery of the content via the determined one or more auxiliary routes. In some instances, the user device is operable to receive the delivery of the content only via the determined auxiliary routes.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for adaptive multiple pathway session setup to support QoS services.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
requesting by a user device, setup of one or more serving routes to be utilized for delivering content to said user device; and
receiving by said user device, said delivery of said content via said one or more serving routes and/or one or more auxiliary routes based on said request.

2. The method according to claim 1, wherein said one or more serving routes and said one or more auxiliary routes are determined based on a provisioning profile for said user device.

3. The method according to claim 2, wherein said provisioning profile comprises preferred service types, desired QoS for one or more services, client account information, and/or client billing and credit verification information.

4. The method according to claim 2, wherein a connection session is established dynamically based on demand, from said user device and/or a supporting network, for each of said determined one or more auxiliary routes.

5. The method according to claim 4, comprising receiving said delivery of said content via said determined one or more auxiliary routes in said one or more established connection sessions.

6. The method according to claim 4, comprising receiving said delivery of said content simultaneously via said determined one or more serving routes and said determined one or more auxiliary routes in said one or more established connection sessions.

7. The method according to claim 4, comprising receiving different contents via said determined one or more serving routes and/or said determined one or more auxiliary routes in said one or more established connection sessions.

8. A system for communication, the system comprising:
one or more circuits for use in a user device, wherein said one or more circuits are operable to request setup of one or more serving routes to be utilized for delivering content to said user device; and
said one or more circuits are operable to receive said delivery of said content via said one or more serving routes and/or one or more auxiliary routes based on said request.

9. The system according to claim 8, wherein said one or more serving routes and said one or more auxiliary routes are determined based on a provisioning profile for said user device.

10. The system according to claim 9, wherein said provisioning profile comprises preferred service types, desired QoS for one or more services, client account information, and/or client billing and credit verification information.
